# FASCICULE DE BREVET EUROPEEN

(11) **EP 2 313 317 B1**
(45) Date de publication et mention de la délivrance du brevet: **04.01.2012**
(21) Numéro de dépôt: 09737059.7
(22) Date de dépôt: 15.07.2009
(51) Int. Cl.: B64D 29/06

(54) **DISPOSITIF POUR CEINTURER UNE NACELLE D'AERONEF**
VORRICHTUNG ZUM UMGURTEN EINER FLUGZEUGGONDEL
DEVICE FOR SHROUDING AN AIRCRAFT NACELLE

(30) Priorité: 18.07.2008 FR 0854898
(43) Date de publication de la demande: 27.04.2011
(73) Titulaire: Airbus Operations, 31060 Toulouse (FR)
(72) Inventeur: PORTE, Alain, F-31770 Colomiers (FR); ANDRE, Robert, F-31120 Lacroix Falgarde (FR); FARGUES, Matthieu, F-82000 Montauban (FR)
(74) Mandataire: Fantin, Laurent
(86) Numéro de dépôt international: PCT/FR2009/051403
(87) Numéro de publication internationale: WO 2010/007313

(56) Documents cités:
- EP-A- 1 245 769
- FR-A- 2 861 364
- US-A- 4 549 708

## Description

La présente invention se rapporte à un dispositif pour ceinturer une nacelle d'aéronef afin de limiter le phénomène d'écopage. FR 2 861 364 A montre une nacelle selon le préambule de la revendication 1. D'autres nacelles sont connues du US 4 549 708 et du EP 1 245 769 A2.

Un ensemble propulsif d'aéronef comprend une nacelle dans laquelle est disposée de manière sensiblement concentrique une motorisation reliée par l'intermédiaire d'un mât au reste de l'aéronef.

La nacelle comprend une paroi intérieure délimitant un conduit avec une entrée d'air à l'avant, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation.

La nacelle comprend également une paroi extérieure de sections sensiblement circulaires, qui s'étend depuis l'entrée d'air jusqu'à la sortie arrière, constituée par la juxtaposition de plusieurs éléments, une entrée d'air sensiblement rigide à l'avant suivie de portes de nacelle, également appelées capots.

L'entrée d'air est rigide en raison de ses formes courbes et des nombreux renforts pour résister aux efforts générés par les écoulements aérodynamiques ou aux éventuels chocs.

Les capots sont rendus mobiles pour autoriser l'accès à la motorisation placée à l'intérieur de la nacelle. Ces capots sont articulés aux restes de la nacelle de différentes manières en fonction de la cinématique retenue et s'étendent depuis le haut de la nacelle, à proximité de l'ancrage du mât, jusqu'au bas de la nacelle et ont une forme demi-cylindrique.

Un capot comprend généralement une tôle avec des raidisseurs sur la surface intérieure pour lui conférer une rigidité relative. La surface extérieure lisse du capot est sensée rester dans le prolongement de la surface extérieure des autres éléments, notamment de l'entrée d'air, lorsque le capot est en position fermée.

Des moyens de verrouillage sont prévus au niveau des bords du capot afin de maintenir le capot en position fermée.

En complément, le cadre de l'ouverture obturée par le capot comprend sur sa périphérie une surface de contact contre laquelle peut prendre appui le capot de manière à garder sa surface extérieure toujours dans le prolongement de celle de l'entrée d'air.

Eventuellement, la surface de contact du cadre peut comprendre un élément déformable tel qu'un joint comprimable.

Durant le vol, compte tenu de leurs rigidités relatives, les capots peuvent se déformer si bien que de l'air peut pénétrer sous lesdits capots à l'intérieur de la nacelle au niveau de la jonction avec l'entrée d'air. Ce phénomène appelé écopage réduit les performances aérodynamiques de l'aéronef, notamment en augmentant la traînée, ce qui se traduit par une consommation de carburant.

Afin de limiter ce phénomène, une solution consiste à augmenter le nombre de raidisseurs prévus au niveau des capots. Cependant cette solution va à l'encontre du résultat souhaité dans la mesure où l'ajout de raidisseurs contribue à augmenter la masse embarquée et donc la consommation de l'aéronef.

Aussi, la présente invention vise à pallier aux inconvénients de l'art antérieur en proposant un dispositif visant à limiter les phénomènes d'écopage sans toutefois augmenter significativement la masse embarquée.

A cet effet, l'invention a pour objet une nacelle d'aéronef comprenant une entrée d'air suivie en partie supérieure d'une partie solidaire du mât, appelée casquette, et d'au moins une porte avec un profil courbe comportant un dispositif de rigidification, caractérisée en ce que le dispositif de rigidification est disposé au niveau du bord amont de ladite porte et comprend :
- un élément souple suivant le profil courbe de ladite porte entre deux points d'ancrage distants,
- au moins un index de sécurité comprenant un loquet susceptible de pivoter autour d'un axe de rotation relié à la porte afin d'occuper une position dite verrouillée dans laquelle l'extrémité du loquet peut prendre appui contre la surface intérieure d'un bord en amont de la porte et une autre position dite déverrouillée dans laquelle l'extrémité du loquet est décalée par rapport audit bord, ledit loquet empêchant en position verrouillé les phénomènes d'écopage en limitant les mouvements de la porte dans la direction radiale vers l'extérieur de la nacelle, et
- des moyens pour tendre l'élément souple entre les deux points d'ancrage et commander le pivotement en position verrouillée dudit loquet.

D'autres caractéristiques et avantages ressortiront de la description qui va suivre de l'invention, description donnée à titre d'exemple uniquement, en regard des dessins annexés sur lesquels :
- la figure 1 est une vue en perspective illustrant l'avant d'une nacelle,
- la figure 2 est un schéma illustrant en perspective le dispositif pour ceinturer la nacelle selon l'invention,
- la figure 3 est un schéma illustrant latéralement le dispositif de l'invention,
- la figure 4 est une coupe du dispositif de l'invention selon la ligne IV-IV de la figure 3,
- la figure 5 est une coupe du dispositif de l'invention selon la ligne V-V de la figure 3,
- la figure 6 est une vue en perspective illustrant le point d'ancrage supérieur du dispositif pour ceinturer la nacelle,
- la figure 7 est une vue en perspective illustrant le point d'ancrage inférieur du dispositif pour ceinturer la nacelle,
- la figure 8 est une vue en perspective illustrant un mode de réalisation des moyens de guidage du dispositif pour ceinturer la nacelle, et
- la figure 9 est une latérale illustrant depuis l'intérieur de la nacelle des moyens d'indexage commandés par le dispositif pour ceinturer la nacelle.

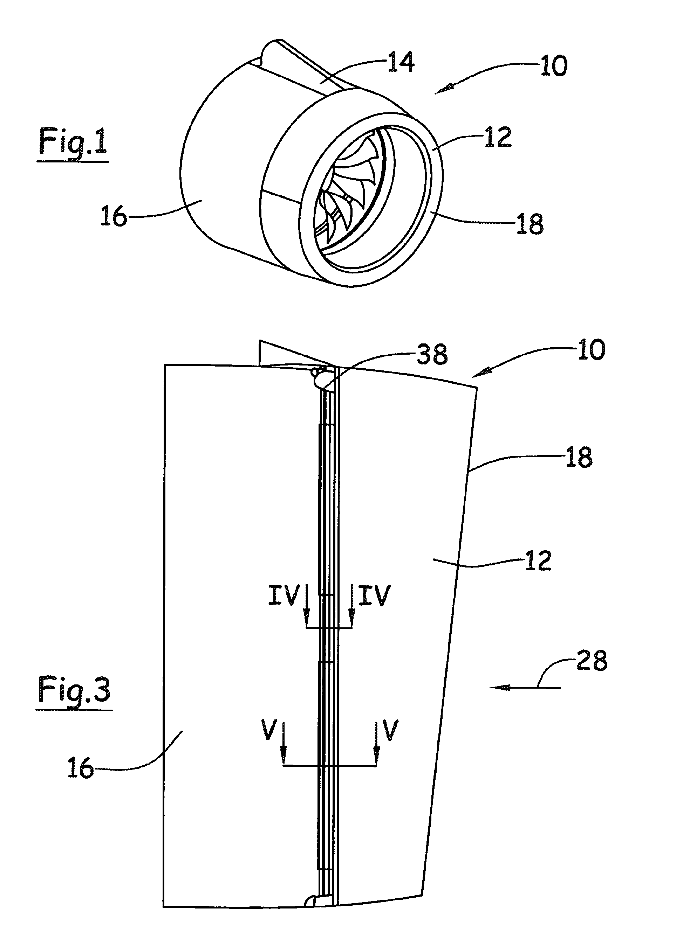

Sur la figure 1, on a représenté en 10 une nacelle d'aéronef susceptible d'être reliée par l'intermédiaire d'un mât au reste de l'aéronef.

La présente demande vise plus particulièrement la surface extérieure de la nacelle. Aussi, l'intérieur connu de l'homme du métier n'est pas plus détaillé.

La nacelle 10 a généralement des sections transversales sensiblement circulaires. La surface extérieure de la nacelle comprend à l'avant une entrée d'air 12, suivie d'au moins une partie 14 reliée au mât, appelée casquette, notamment en partie supérieure au niveau du mât et d'au moins une partie mobile 16.

L'entrée d'air comprend à l'avant une lèvre 18 décrivant une forme sensiblement circulaire qui s'étend dans un plan qui peut être sensiblement perpendiculaire à l'axe longitudinal de la nacelle, ou non perpendiculaire, avec la partie de la lèvre située à 12h légèrement avancée. Toutefois, d'autres formes d'entrée d'air peuvent être envisagées.

L'entrée d'air 12 est sensiblement rigide en raison de ses formes courbes et des nombreux renforts pour résister aux efforts générés par les écoulements aérodynamiques, notamment en vol, et aux éventuels chocs.

L'entrée d'air 12 n'est pas plus détaillée car elle est connue de l'homme du métier. La partie supérieure fixe 14 appelée également casquette a des formes adaptées pour limiter la traînée au niveau de la jonction de la nacelle et du mât. Cette partie supérieure fixe n'est pas plus détaillée car elle est connue de l'homme du métier.

Sous les chargements aérodynamiques durant le vol, la nacelle se déplace légèrement par rapport au mât et donc par rapport à la casquette, notamment selon l'axe longitudinal de la nacelle.

Ainsi, la surface extérieure de la nacelle est constituée de surfaces extérieures juxtaposées de plusieurs éléments.

La partie mobile 16 également appelée porte ou capot permet de dégager une ouverture afin d'accéder à l'intérieur de la nacelle, notamment pour la maintenance de la motorisation.

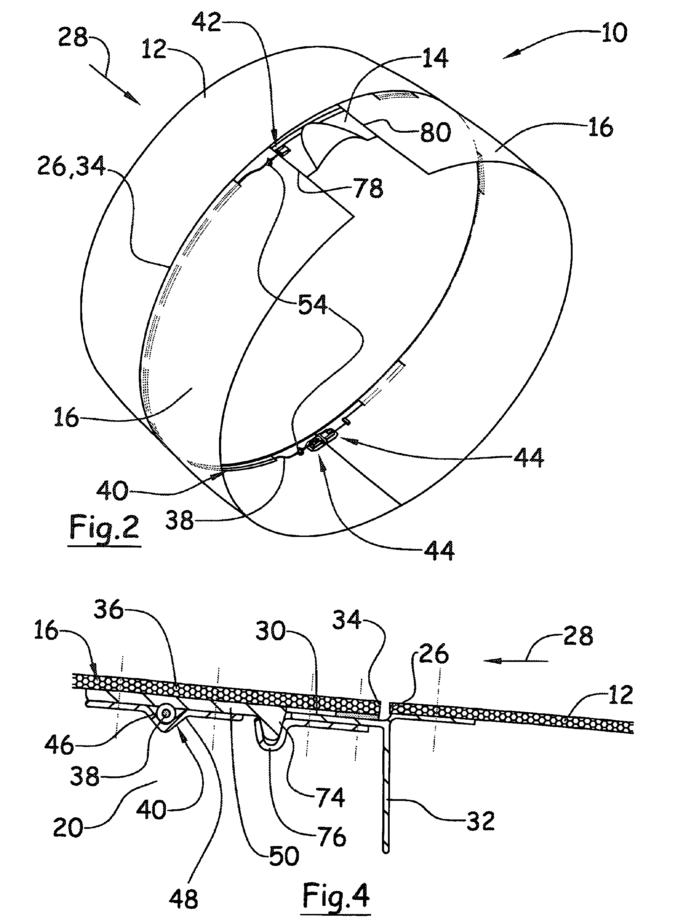

Selon la configuration illustrée sur les figures 2 et 3, la nacelle comprend deux portes 16 disposées de manière sensiblement symétrique par rapport au plan médian vertical, qui s'étendent à l'avant depuis l'entrée d'air 12, en partie supérieure depuis la partie fixe 14 et se rejoignent en partie inférieure, et qui jouxtent éventuellement à l'arrière une ou plusieurs parties fixes (non représentées et non détaillées).

Toutefois, l'invention n'est pas limitée à ce mode de réalisation et couvre de nombreuses variantes. Ainsi, la nacelle ne pourrait comprendre qu'une seule porte 16.

L'invention est décrite appliquée à une porte.

La porte comprend des moyens d'articulation lui permettant d'occuper un premier état correspondant à la position fermée dans laquelle elle obture une ouverture 20, la surface extérieure de la porte étant au même niveau que celles des autres éléments formant la nacelle, et un autre état correspondant à la position ouverte dans laquelle la porte dégage au moins partiellement l'ouverture 20.

Les moyens d'articulation ainsi que les éventuels moyens de manoeuvre permettant de bouger la porte ne sont pas plus détaillés car ils sont connus de l'homme du métier.

En complément, la porte comprend des moyens de verrouillage 24 permettant de maintenir la porte en position fermée. En présence de deux portes jointives en partie inférieure, les moyens de verrouillage sont de préférence disposés sur le bord inférieur des portes, les moyens d'articulation étant disposés au niveau du bord supérieur. Ces moyens de verrouillage ne sont pas plus détaillés car ils sont également connus de l'homme du métier.

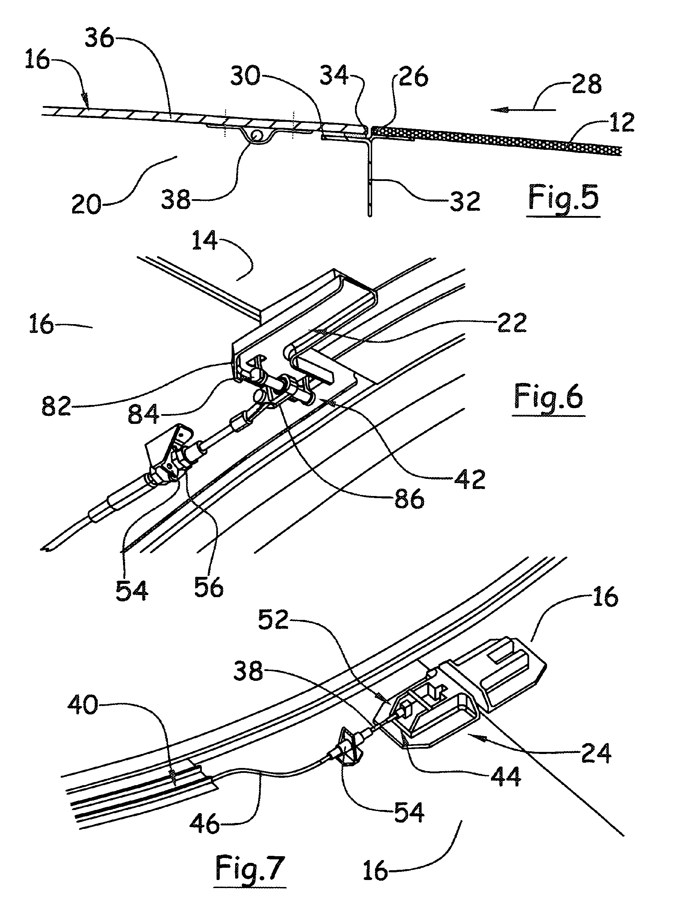

Comme illustré sur les figures 4 et 5, l'ouverture 20 est délimitée par un bord périphérique, dont une portion 26 s'étend en amont de la porte 16 selon le sens d'écoulement du flux aérodynamique matérialisé par la flèche 28.

Selon l'exemple illustré sur les figures, le bord 26 de l'ouverture en amont de la porte correspond au bord arrière de l'entrée d'air 12. Cependant, ce bord de l'ouverture pourrait être prévu au niveau d'un autre élément fixe ou mobile.

Le bord périphérique de l'ouverture peut comprend une surface d'appui 30 décalée vers l'intérieur de la nacelle contre laquelle peut prendre appui la porte 16 en position fermée afin que ladite porte ne pénètre pas trop zig l'intérieur de la nacelle et que sa surface extérieure reste dans le prolongement des autres surfaces extérieures de la nacelle.

Selon un mode de réalisation, cette surface d'appui 30 correspond à la surface supérieure d'une branche d'un Té 32 dont la surface supérieure de l'autre branche est solidarisée à la surface intérieure de la paroi de l'entrée d'air au niveau du bord périphérique de l'ouverture.

En complément, un élément souple tel qu'un joint comprimable peut être rapporté au niveau de la surface d'appui 30 pour assurer l'étanchéité.

La porte 16 comprend un bord 34 s'étendant de manière sécante au flux aérodynamique 28, disposé en amont de la porte selon le sens d'écoulement dudit flux, à proximité du bord 26 de l'ouverture afin de limiter les perturbations du flux aérodynamique.

La porte 16 comprend une paroi 36, par exemple une tôle, renforcée par des raidisseurs non représentés. Cette paroi 36 a une section courbe selon un plan transversal, conforme au profil circulaire de la nacelle.

Pour limiter le phénomène d'écopage, la porte 16 comprend à proximité du bord amont 34 un dispositif de rigidification comportant un élément souple 38 inextensible sous charge avec de préférence un effet de rétractation sous des températures négatives, notamment en vol, des moyens 40 de guidage permettant à l'élément souple 38 de suivre le profil courbe de la porte, l'élément souple 38 comportant un premier point d'ancrage 42 à proximité d'une première extrémité du profil courbe de la porte et un second point d'ancrage 44 à proximité de la seconde extrémité du profil courbe de la porte et étant tendu entre les deux points d'ancrage 42 et 44.

Cette solution permet sans augmenter de manière significative la masse embarquée d'accroître la raideur de la porte afin de limiter l'apparition du phénomène d'écopage et de réduire ainsi les perturbations de la traînée. Ce dispositif placé à l'intérieur de la nacelle permet d'empêcher la porte de se déplacer radialement vers l'extérieur de la nacelle.

Selon un mode de réalisation illustré sur les différentes figures, l'élément souple 38 se présente sous la forme d'un câble ou analogue. En variante, on pourrait utiliser une bande comme élément souple.

Par élément souple, on entend un ou plusieurs éléments souples reliés les uns aux autres.

Avantageusement, l'élément souple peut être précontraint.

Selon les cas, l'élément souple 38 peut être tendu ou pré-contraint seulement lorsque la porte est en position fermée ou en permanence.

L'élément souple 38 est de préférence disposé dans une gaine 46.

Selon un mode réalisation, les moyens 40 de guidage comprennent au moins une cornière 48 plaquée, directement ou non, contre la surface intérieure de la porte, dont la section permet de délimiter un logement pour l'élément souple 38, ce dernier étant prisonnier entre ladite cornière et la porte. Ces moyens 40 de guidage permettent à l'élément souple de suivre le profil de la porte.

Selon les cas, les moyens 40 de guidage comprennent une seule cornière ou plusieurs cornières alignées, espacées ou non.

Ces moyens 40 de guidage peuvent avoir différentes formes et être métalliques ou en matériaux composites selon les contraintes environnantes. Sur les figures 4 et 5, on a représenté deux variantes différentes. Selon la figure 5, la cornière formant les moyens de guidage est plaquée directement contre la surface intérieure de la porte. Selon la figure 4, la cornière est plaquée contre une platine 50 (dont la fonction sera détaillée ultérieurement) elle-même plaquée contre la surface intérieure de la porte.

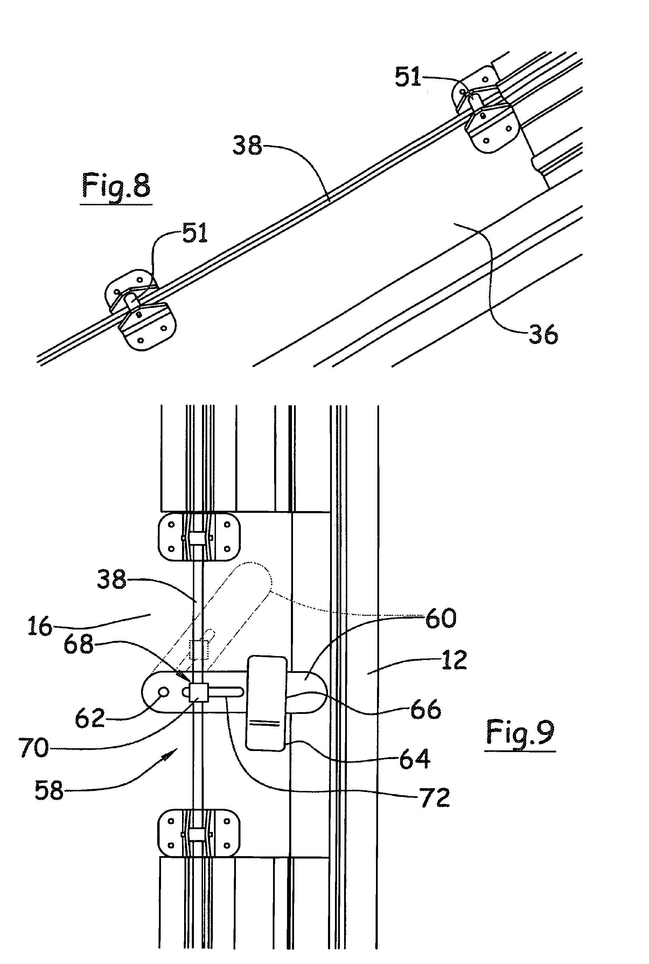

Selon une autre variante illustrée sur la figure 8, les moyens de guidage comprennent des roulettes 51 solidaires de la porte 36 grâce à des platines prévues à chaque extrémité de chaque roulette 51. Selon cette variante, l'élément souple 38 passe entre les roulettes 51 et la porte afin de suivre approximativement le prof il de ladite porte. Les roulettes 51 sont espacées d'une distance adaptée permettant à l'élément souple 38 de suivre approximativement le profil de la porte 36.

Selon d'autres variantes, les moyens de guidage peuvent être obtenus par une combinaison de différents moyens de guidage, par exemple des cornières et des roulettes.

Selon une caractéristique de l'invention, le dispositif comprend des moyens 52 pour tendre l'élément souple et le pré contraindre lors du vol, et de préférence lorsque la porte est en position fermée.

Avantageusement, les moyens 52 pour tendre le câble sont commandés par les moyens 24 de verrouillage de la porte de façon à ce que le câble soit tendu lorsque les moyens de verrouillage sont à l'état verrouillé correspondant à la position fermée de la porte et détendu lorsque lesdits moyens 24 sont à l'état déverrouillé correspondant à la position ouverte de la porte.

Selon un mode de réalisation, l'élément souple se présente sous forme d'un câble disposé dans une gaine 46 venant en contact à chacune de ses extrémités contre une butée 54. A chaque extrémité de la gaine, le câble 38 dont la longueur est supérieure à celle de la gaine n'est plus recouvert par la gaine et ses extrémités sont reliées en partie supérieure à des moyens 22 d'articulation entre la porte 16 et la casquette 14 (détaillés ultérieurement) et en partie inférieure aux moyens de verrouillage 24 de la porte.

Ainsi, lorsque les moyens de verrouillage 24 sont à l'état verrouillé, ils exercent une tension sur l'élément souple 38. A contrario, lorsque les moyens 24 de verrouillage sont à l'état déverrouillé, ils relâchent le câble.

De préférence, le dispositif comprend des moyens 56 pour ajuster la précontrainte, par exemple une molette réglant la longueur du câble non protégée par la gaine à au moins une des extrémités du câble.

Afin de limiter encore plus les phénomènes d'écopage, notamment dans les zones les plus sensibles situées à 3h et/ou à 9h, on prévoit au moins un index de sécurité 58, illustré en détails sur la figure 9, au moins un index de sécurité étant solidaire de chaque porte 16, au niveau des zones sensibles situées à 3h et 9h. Un index de sécurité comprend un loquet 60 susceptible de pivoter autour d'un axe de rotation 62 relié à la porte 16 afin d'occuper une position dite verrouillée, illustrée en trait fort, dans laquelle l'extrémité du loquet 60 peut prendre appui contre la surface intérieure du bord 26 en amont de la porte 16 correspondant généralement à l'entrée d'air 12 et une autre position dite déverrouillée, illustrée en pointillée, dans laquelle l'extrémité du loquet 60 est décalée par rapport au bord 26. Ainsi, dans la position verrouillée, le loquet 60 empêche les phénomènes d'écopage en limitant les mouvements de la porte dans la direction radiale vers l'extérieur de la nacelle. Dans la position déverrouillée, le loquet 60 autorise l'ouverture de la porte 16, n'étant plus retenu par le bord 26.

Afin que tous les efforts ne soient pas repris par l'axe de rotation 62, une pièce 64 comprenant une surface d'appui est reliée à la porte 16 et placée entre l'axe de rotation 62 et le bord 26, à proximité du bord de la porte 16 susceptible de coopérer avec le bord 26. Cette pièce d'appui 64 comprend une partie solidaire de la porte 16 et une partie 66 écartée de la surface intérieure de la porte. La disposition de cette pièce d'appui 64 est ajustée en fonction de l'axe de rotation 62 et du loquet de manière à ce que lorsque le loquet 60 occupe la position verrouillée il soit disposé entre la partie 66 et la porte 16 afin que la pièce d'appui 64 reprenne une partie des efforts.

Selon l'invention, le loquet 60 est relié à l'élément souple 38 de manière à synchroniser la tension de l'élément souple 38 et le pivotement de l'index 58 dans la position verrouillée. A cet effet, les moyens de liaison 68 entre l'élément souple 38 et l'index 58 comprennent un élément 70 solidaire de l'élément souple 38 qui comprend une partie susceptible de coulisser dans une lumière 72 ménagée dans l'index 58. Ainsi, la tension de l'élément souple 38 provoque la translation de l'élément de liaison 70 selon une direction parallèle au bord 26 qui engendre la rotation de l'index 58.

En complément, le dispositif de rigidification de la porte peut comprendre au niveau du bord 34 une rainure 74 susceptible de se loger dans une gorge 76 dont l'ouverture est orientée vers l'extérieur de la nacelle et disposée au niveau de la surface d'appui 30. Selon un mode de réalisation illustré sur la figure 4, la rainure 74 est prévue au niveau d'une platine 50 intercalée entre la porte et la cornière 40.

La rainure 74 et/ou la gorge 76 peuvent s'étendre sur toute la longueur du bord 34 de la porte ou non, sur un ou plusieurs tronçons.

En variante, d'autres formes peuvent être prévues au niveau du bord de la porte et du bord de l'ouverture. Ces formes complémentaires peuvent être de type statique comme précédemment décrit ou de type dynamique et autoriser un ou plusieurs degrés de liberté.

Selon la variante illustrée sur la figure 2, dans le cas d'une nacelle avec deux portes s'étendant du pied du mât jusqu'à la partie inférieure, le deux portes sont équipées de dispositifs de rigidification qui permettent d'obtenir un dispositif pour ceinturer la nacelle.

Selon les variantes, le dispositif pour ceinturer la nacelle peut comprendre un ou plusieurs éléments souples 38 reliés directement ou indirectement entre eux, l'un d'eux étant relié à un point d'ancrage 42 situé au niveau d'un premier bord 78 de la casquette et un autre étant relié à un point d'ancrage 42 situé au niveau d'un second bord 80 de la casquette. Le ou les élément(s) souple(s) 38 est/sont tendu(s) entre les deux points d'ancrage et exerce un effort de pression radial sur la ou les portes et la casquette. De préférence, les éléments souples ont tendance à se rétracter avec des températures négatives, notamment en vol, ce qui tend à augmenter les efforts radiaux.

Comme précédemment, les moyens 52 pour tendre le câble sont commandés par les moyens 24 de verrouillage de la porte de façon à ce que le câble soit tendu lorsque les moyens de verrouillage sont à l'état verrouillé correspondant à la position fermée de la porte et détendu lorsque lesdits moyens 24 sont à l'état déverrouillé correspondant à la position ouverte de la porte.

De préférence, les points d'ancrage 42 sont placés à l'avant de la casquette.

Selon l'invention, les points d'ancrage 42 autorisent un mouvement de translation relatif, selon une direction parallèle à l'axe longitudinal de la nacelle, entre la casquette 14 et les portes 16. Cet agencement permet de simplifier la liaison entre la casquette et la nacelle en supprimant les systèmes de liaison complexes de l'art antérieur.

Selon un mode de réalisation illustré sur la figure 6, un point d'ancrage 42 comprend une platine 82 fixée au niveau de la surface intérieure de la casquette 14 et qui s'étend en dessous de la surface intérieure de la porte 16. Cette platine 82 supporte un axe 84 qui s'étend selon la direction longitudinale, chaque extrémité dudit axe 84 étant reliée à la platine 82. L'élément souple 38 relié au point d'ancrage 42 comprend à son extrémité une bague 86 susceptible de coulisser le long dudit axe 84. Ainsi la liaison entre l'axe 84 et la bague 86 permet de reprendre les efforts, notamment dans un plan perpendiculaire à la direction longitudinale, tout en autorisant un mouvement relatif entre les deux éléments selon la direction longitudinale.

## Revendications

1. Nacelle d'aéronef comprenant une entrée d'air (12) suivie en partie supérieure d'une partie (14) solidaire du mât, appelée casquette, et d'au moins une porte avec un profil courbe comportant un dispositif de rigidification, **caractérisée en ce que** le dispositif de rigidification est disposé au niveau du bord (34) amont de ladite porte et comprend :
- un élément souple (38) suivant le profil courbe de ladite porte entre deux points d'ancrage (42) distants,
- au moins un index de sécurité comprenant un loquet (60) susceptible de pivoter autour d'un axe de rotation (62) relié à la porte (16) afin d'occuper une position dite verrouillée dans laquelle l'extrémité du loquet (60) peut prendre appui contre la surface intérieure d'un bord (26) en amont de la porte (16) et une autre position dite déverrouillée dans laquelle l'extrémité du loquet (60) est décalée par rapport audit bord (26), ledit loquet (60) empêchant en position verrouillé les phénomènes d'écopage en limitant les mouvements de la porte dans la direction radiale vers l'extérieur de la nacelle, et
- des moyens pour tendre l'élément souple (38) entre les deux points d'ancrage (42, 44) et commander le pivotement en position verrouillée dudit loquet (60).

2. Nacelle d'aéronef selon la revendication 1, **caractérisée en ce qu'**elle comprend des moyens de liaison (68) entre l'élément souple (38) et l'index (58) comprennent un élément (70) solidaire de l'élément souple (38) qui comprend une partie susceptible de coulisser dans une lumière (72) ménagée dans l'index (58).

3. Nacelle comprenant une entrée d'air (12) suivie en partie supérieure d'une casquette (14) et de deux portes (16) disposées de manière symétrique et jointives en partie inférieure de la nacelle, **caractérisée en ce qu'**elle comprend un dispositif pour la ceinturer comprenant pour chaque porte un dispositif de rigidification selon la revendication 1 ou 2.

4. Nacelle d'aéronef selon l'une quelconque des revendications précédentes, **caractérisée en ce qu'**elle comprend au moins un point d'ancrage (42) reliant un élément souple (38) et la casquette (14), ledit point d'ancrage (42) autorisant un mouvement de translation relatif, selon une direction parallèle à l'axe longitudinal de la nacelle, entre la casquette (14) et la porte (16) dont ledit élément souple (38) suit le profil.

5. Nacelle d'aéronef selon l'une quelconque des revendications précédentes, **caractérisée en ce que** les moyens (52) pour tendre l'élément souple (38) sont commandés par les moyens (24) de verrouillage de la porte de façon à ce que l'élément souple (38) soit tendu lorsque les moyens (24) de verrouillage sont à l'état verrouillé correspondant à la position fermée de la porte et détendu lorsque lesdits moyens (24) de verrouillage sont à l'état déverrouillé correspondant à la position ouverte de la porte.

6. Nacelle d'aéronef selon l'une quelconque des revendications précédentes, **caractérisée en ce que** l'élément souple (38) est précontraint.

7. Nacelle d'aéronef selon la revendication 6, **caractérisée en ce que** le dispositif de rigidification comprend des moyens (56) pour ajuster la précontrainte de l'élément souple.

8. Nacelle d'aéronef selon l'une quelconque des revendications précédentes, **caractérisée en ce qu'**elle comprend des moyens (40) de guidage de l'élément souple sous forme d'au moins une cornière (48) plaquée, directement ou non, contre la surface intérieure de la porte, dont la section permet de délimiter un logement pour l'élément souple (38), ce dernier étant prisonnier entre ladite cornière et la porte.

9. Nacelle d'aéronef selon l'une quelconque des revendications précédentes, **caractérisée en ce que** l'ouverture obturée par la porte comprend une surface d'appui (30) contre laquelle prend appui la porte en position fermée de manière à ce que la surface extérieure de la porte soit dans le prolongement des autres surfaces extérieures des autres éléments formant la nacelle.

10. Nacelle d'aéronef selon la revendication 9, **caractérisée en ce qu'**elle comprend au niveau du bord amont de la porte (34) une rainure (74) susceptible de se loger dans une gorge (76) dont l'ouverture est orientée vers l'extérieur de la nacelle et disposée au niveau de la surface d'appui (30).

## Claims

1. Aircraft nacelle that comprises an air intake (12) that is followed at the upper part by a part (14) that is integral with the mast, called a cap, and at least one door with a curved profile that comprises a stiffening device, **characterized in that** the stiffening device is arranged at the edge (34) that is upstream from said door and that comprises:
- A flexible element (38) that follows the curved profile of said door between two remote anchoring points (42),
- At least one safety index that comprises a latch (60) that can pivot around an axis of rotation (62) that is connected to the door (16) so as to occupy a so-called locked position in which the end of the latch (60) can rest against the inside surface of an edge (26) upstream from the door (16) and another so-called unlocked position in which the end of the latch (60) is offset relative to said edge (26), whereby in the locked position, said latch (60) prevents the scooping phenomena by limiting the movements of the door in the radial direction toward the outside of the nacelle, and
- Means for stretching the flexible element (38) between the two anchoring points (42, 44) and for controlling the pivoting in the locked position of said latch (60).

2. Aircraft nacelle according to Claim 1, wherein it comprises connecting means (68) between the flexible element (38) and the index (58), said connecting means comprising an element (70) that is integral with the flexible element (38) that comprises a part that can slide into the slot (72) that is made in the index (58).

3. Nacelle that comprises an air intake (12) followed at the upper part by a cap (14) and two doors (16) that are arranged symmetrically and contiguously at the lower part of the nacelle, wherein it comprises a device for encircling it that comprises - for each door - a stiffening device according to Claim 1 or 2.

4. Aircraft nacelle according to any of the preceding claims, wherein it comprises at least one anchoring point (42) that connects a flexible element (38) and the cap (14), whereby said anchoring point (42) allows a relative translational movement, in a direction that is parallel to the longitudinal axis of the nacelle, between the cap (14) and the door (16) of which said flexible element (38) follows the profile.

5. Aircraft nacelle according to any of the preceding claims, wherein the means (52) for stretching the flexible element (38) are controlled by the means (24) for locking the door so that the flexible element (38) is stretched when the locking means (24) are in the locked state corresponding to the closed position of the door and extended when said locking means (24) are in the unlocked state corresponding to the open position of the door.

6. Aircraft nacelle according to any of the preceding claims, wherein the flexible element (38) is prestressed.

7. Aircraft nacelle according to Claim 6, wherein the stiffening device comprises means (56) for adjusting the prestressing of the flexible element.

8. Aircraft nacelle according to any of the preceding claims, wherein it comprises means (40) for guiding the flexible element in the form of at least one angle bar (48) that is flattened, directly or not, against the inside surface of the door, whose cross-section makes it possible to delimit a housing for the flexible element (38), whereby the latter is trapped between said angle bar and the door.

9. Aircraft nacelle according to any of the preceding claims, wherein the opening that is sealed by the door comprises a support surface (30) against which rests the door in the closed position in such a way that the outside surface of the door is in the extension of the other outside surfaces of the other elements that form the nacelle.

10. Aircraft nacelle according to Claim 9, wherein at the edge upstream from the door (34), it comprises a groove (74) that can be housed in an undercut (76) whose opening is oriented toward the outside of the nacelle and arranged at the support surface (30).

## Patentansprüche

1. Gondel eines Flugzeugs, umfassend einen Lufteinlass (12), an den sich im oberen Teil ein mit der Strebe fest verbundenes Teil (14), welches als Schirm bezeichnet wird, sowie darüber hinaus wenigstens eine Abdeckung mit einem gekrümmten Profil, welche eine Versteifungsvorrichtung umfasst, anschließen, **dadurch gekennzeichnet, dass** die Versteifungsvorrichtung im Bereich der stromaufwärtigen Kante (34) der Abdeckung angeordnet ist und umfasst:
- ein flexibles Element (38) entlang dem gekrümmten Profil der Abdeckung zwischen zwei beabstandeten Verankerungsstellen (42),
- wenigstens eine Sicherheitsverriegelung mit einer Klinke (60), die geeignet ist, um eine mit der Abdeckung (16) verbundene Rotationsachse (62) zu verschwenken, um eine sogenannte verriegelte Position einzunehmen, in der sich das Ende der Klinke (60) an der Innenseite einer Kante (26) stromaufwärts der Abdeckung (16) abstützen kann, sowie eine weitere sogenannte entriegelte Position, in der das Ende der Klinke (60) gegenüber der Kante (26) versetzt ist, wobei die Klinke (60) in der verriegelten Position die Einström-Phänomene dadurch verhindert, dass die Bewegungen der Abdeckung in radialer Richtung zur Außenseite der Gondel begrenzt werden, und
- Mittel, um das flexible Element (38) zwischen den zwei Verankerungsstellen (42, 44) zu spannen und um das Verschwenken der Klinke (60) in die verriegelte Position zu steuern.

2. Gondel eines Flugzeugs nach Anspruch 1, **dadurch gekennzeichnet, dass** sie Verbindungsmittel (68) zwischen dem flexiblen Element (38) und der Verriegelung (58) umfasst, die ein mit dem flexiblen Element (38) fest verbundenes Element (70) aufweisen, das ein Teil umfasst, welches in einem in der Verriegelung (58) ausgebildeten Langloch (72) verschieblich ist.

3. Gondel umfassend einen Lufteinlass (12), an den sich im oberen Teil ein Schirm (14) sowie zwei symmetrisch angeordnete und im unteren Teil der Gondel aneinander stoßende Abdeckungen (16) anschließen, **dadurch gekennzeichnet, dass** sie eine Vorrichtung für ihr Umschließen umfasst, die für jede Abdeckung eine Versteifungsvorrichtung nach Anspruch 1 oder 2 umfasst.

4. Gondel eines Flugzeugs nach einem der vorstehenden Ansprüche, **dadurch gekennzeichnet, dass** sie wenigstens eine Verankerungsstelle (42) aufweist, welche ein flexibles Element (38) und den Schirm (14) verbindet, wobei die Verankerungsstelle (42) eine Relatiwerschiebebewegung, in einer Richtung parallel zur Längsachse der Gondel, zwischen dem Schirm (14) und der Abdeckung (16), deren flexibles Element (38) dem Profil folgt, zulässt.

5. Gondel eines Flugzeugs nach einem der vorstehenden Ansprüche, **dadurch gekennzeichnet, dass** die Mittel (52) zum Spannen des flexiblen Elements (38) über die Mittel (24) zum Verriegeln der Abdeckung derart betätigt werden, dass das flexible Element (38) gespannt wird, wenn die Verriegelungsmittel (24) sich im verriegelten Zustand, der der geschlossenen Position der Abdeckung entspricht, befinden, und entspannt wird, wenn die Verriegelungsmittel (24) sich im entriegelten Zustand, der der geöffneten Position der Abdeckung entspricht, befinden.

6. Gondel eines Flugzeugs nach einem der vorstehenden Ansprüche, **dadurch gekennzeichnet, dass** das flexible Element (38) vorgespannt ist.

7. Gondel eines Flugzeugs nach Anspruch 6, **dadurch gekennzeichnet, dass** die Versteifungsvorrichtung Mittel (56) zum Einstellen der Vorspannung des flexiblen Elements umfasst.

8. Gondel eines Flugzeugs nach einem der vorstehenden Ansprüche,
**dadurch gekennzeichnet, dass** sie Mittel (40) zum Führen des flexiblen Elements in Form wenigstens eines Anschlusswinkels (48), der - direkt oder nicht - an die Innenseite der Abdeckung angelegt ist, umfasst, dessen Querschnitt ermöglicht, eine Aufnahme für das flexible Element (38) zu begrenzen, wobei letzteres zwischen dem Anschlusswinkel und der Abdeckung eingeschlossen ist.

9. Gondel eines Flugzeugs nach einem der vorstehenden Ansprüche, **dadurch gekennzeichnet, dass** die durch die Abdeckung verschlossene Öffnung eine Anlagefläche (30) aufweist, an der sich die Abdeckung in geschlossener Position abstützt, so dass die Außenseite der Abdeckung in der Fortsetzung der anderen Außenseiten der weiteren die Gondel bildenden Elemente liegt.

10. Gondel eines Flugzeugs nach Anspruch 9, **dadurch gekennzeichnet, dass** sie im Bereich der stromaufwärtigen Kante (34) der Abdeckung eine Nut (74) aufweist, die geeignet ist, in einer Vertiefung (76) aufgenommen zu werden, deren Öffnung zur Außenseite der Gondel gerichtet und im Bereich der Anlagefläche (30) angeordnet ist.
